# EUROPEAN PATENT APPLICATION

(11) **EP 2 328 291 A1**
(43) Date of publication of application: **01.06.2011**
(21) Application number: 09814694.7
(22) Date of filing: 18.09.2009
(51) Int. Cl.: H04J 11/00

(54) **MOBILE COMMUNICATION SYSTEM**

(30) Priority: 19.09.2008 CN 200810160942
(71) Applicant: Sharp Kabushiki Kaisha, Osaka-shi, Osaka 545-8522 (JP)
(72) Inventor: HUANG, Lei, Pudong, Shanghai 201203 (CN); LIU, Renmao, Pudong, Shanghai 201203 (CN); DING, Ming, Pudong, Shanghai 201203 (CN); CHEN, Chen, Pudong, Shanghai 201203 (CN); SUN, Guolin, Pudong, Shanghai 201203 (CN); ZHANG, Yingyu, Pudong, Shanghai 201203 (CN)
(74) Representative: Müller - Hoffmann & Partner
(86) International application number: PCT/JP2009/066441
(87) International publication number: WO 2010/032850

(57) **Abstract**

This invention provides a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, and the set of the plurality of downlink component carriers including (i) a downlink component carrier employing a subframe structure according to which some symbols at the beginning of a subframe include control information and (ii) a downlink component carrier employing a subframe structure according to which some symbols at the beginning of a subframe do not include control information.

## Description

### Technical Field

The present invention relates to a technical field of mobile communication, particularly to (i) a method (hereinafter, simply referred to as "physical layer processing method") for processing a physical layer for downlink of an LTE (Long-Term Evolution)-Advanced system and (ii) a subframe structure for a multicast single frequency network (MBMS Single Frequency Network; hereinafter, abbreviated as "MBSFN"). More specifically, the present invention relates to (i) a system and a method for multiplexing a unicast service and a Multimedia Broadcast and Multicast Service (hereinafter, abbreviated as "MBMS"), (ii) a method for transmitting a unicast service and MBMS in a multiplexed manner, and (iii) a method for receiving a unicast service and MBMS in a multiplexed manner.

### Background Art

In application of the Orthogonal Frequency Division Multiplexing (hereinafter, abbreviated as "OFDM"), the most major issue is to effectively prevent extension of a multipath time delay. In order that a cycle of each data symbol for modulating a subcarrier becomes N-times greater than its original cycle, a supplied data stream is subjected to serial-to-parallel conversion so as to be put into N parallel sub-channels. This reduces a ratio between the extension of the time delay and the cycle of the symbol to one-nth. In order to minimize an intersymbol interference, a guard interval (GI) is provided between OFDM symbols. Typically, the guard interval has a length Tg which is longer than a maximum extension of a time delay of a radio channel. Therefore, a multipath component of a certain symbol does not give any interference to a next symbol. Here, the guard interval does not need to include any signal inserted thereto. Namely, the guard interval can be a blank period in transmission. However, this results in Inter-Cell Interference (hereinafter, abbreviated as "ICI"), which is caused by multipath propagation. Namely, this fails to maintain orthogonality between subcarriers, thereby causing interference between different subcarriers. In order to remove ICI occurring due to multipath, the OFDM symbol needs to be provided with a guard interval into which a Cyclic Prefix signal (hereinafter, abbreviated as "CP") is inserted. With this, in a Fast Fourier Transform (FFT) cycle, a copy, an OFDM symbol with a time delay, has a waveform with an integer number of cycles. Consequently, no ICI occurs during modulation of a delay signal whose time delay is shorter than the length Tg of the guard period.

For the mobile communication system, there are cells having different radiuses, for example, a microcell and a macrocell. The macrocell has a quite large radius. Therefore, for data reception for a user at a boundary between cells, a long CP should be used, in order that the data reception is not subjected to a great interference caused by a symbol. According to the current definition provided by the 3GPP, in applying OFDM in an LTE system, a length of CP should be selected from (i) Normal Cyclic Prefix (hereinafter, abbreviated as "Normal CP" and (ii) Extended Cyclic Prefix (hereinafter, abbreviated as "Extended CP"). Normal CP is applied to the microcell, which has a small radius. This enables to secure signal quality and improve resource usage. On the other hand, Extended CP is mainly applied to the macrocell, which has a large radius. Also, Extended CP is used to realize macro diversity of the macrocell during MBMS transmission. In a case where Extended CP is used when downlink data is transmitted in a frequency division duplex (FDD) mode in an LTE system, the number of pieces of data of symbols to be transmitted per time slot is smaller by one, as compared with a case where Normal CP is used. Thus, use of Extended CP reduces the resource usage, as compared with the case involving use of Normal CP. Namely, in return for a loss in the bandwidth resource, data transmission using Extended CP secures a broad coverage.

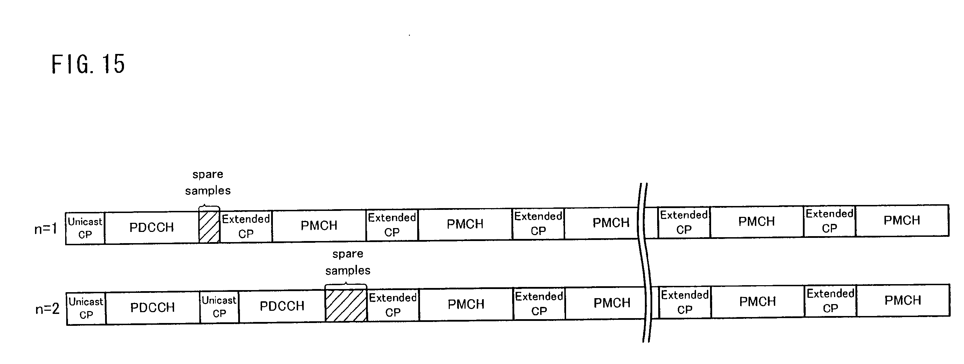

Fig. 15 shows a subframe format of MBSFN defined in the LTE system. As shown in Fig. 15, in an MBSFN subframe in LTE, one or two symbols (n = 1 or n = 2) at the beginning are symbols for transmitting unicast information. Each of these symbols includes a cell-specific reference signaling, resource allocation information for the uplink, and ACK/NAK information for the uplink. The cell-specific reference signaling is used to help estimation of a channel for a user who uses the unicast service. In the MBSFN subframe, a unicast symbol part and a multicast symbol part have CP of different lengths. Due to this, the MBSFN subframe includes a spare sample of a small area. However, the 3GPP standards have no definition as to the content being to be transmitted in this time slot. For one or two symbols at the beginning of the MBSFN subframe, a length of CP is determined by a length of CP which is employed in the 0th subframe in the system. For the other symbols in the MBSFN subframe, Extended CP is used and MBMS transmission is carried out. In the 3GPP RANl 51 bis meeting, most companies unanimously considered, in order to prevent a loss in MBSFN throughput, transmitting signals based on an MBSFN area while using a length of the unicast symbol part as a reference parameter. The Physical Control Format Indicator Channel (PCFICH) should be transmitted in each subframe (including the MBSFN subframe) for the downlink. Further, PCFICH should be able to accurately designate a length of a symbol including a unicast control signal in the subframe (including the MBSFN subframe). For the MBSFN subframe, the length of the symbol including the unicast control signal, which length is designated by PCFICH, must correspond to a parameter designated by higher layer signaling. An MBSFN subframe and a unicast subframe which are used in MBSFN transmission share a frequency spectrum resource by time division multiplex (TDM). Speaking from the viewpoint of the purpose of channel estimation and measurement, all User Equipment (hereinafter, abbreviated as "UE") can identify, via the higher layer signaling (broadcast control channel BCCH), which of the subframes is an MBSFN subframe.

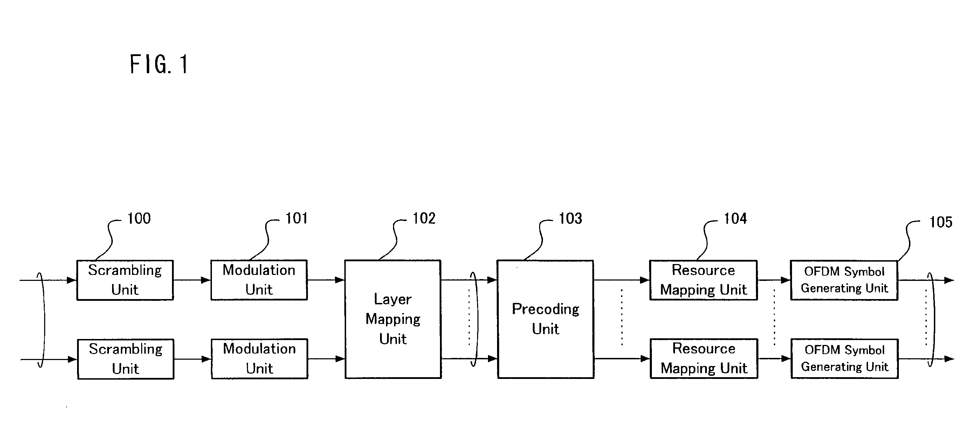

Fig. 1 is a view illustrating a process step in a physical layer of a current LTE system. Encoded bits of a codeword to be transmitted through a physical channel are scrambled. Then, a stream of the scrambled bits is modulated, and complex value modulation symbols are generated. The modulated complex value modulation symbols are mapped onto one or plural transmission layers, and the complex value modulation symbols on the layers are subjected to a precoding process. The complex value modulation symbols for antennas are mapped onto Resource Elements (hereinafter, abbreviated as "RE"), and OFDM symbols in the complex-time domain are generated for the antennas. An OFDM symbol generating unit includes an IFFT (Inverse Fast Fourier transform) process, a CP insertion process, and a digital-to-analog conversion process. CPs to be inserted in the CP insertion processes for the respective antennas have the same length.

Even if the demand for a bandwidth is further increased, an LTE-Advanced system can increase its system frequency spectrum to 100 MHz (Non-Patent Literature 1). Such a large frequency spectrum can be made of (i) a continuous bandwidth or (ii) a plurality of small bandwidths, which are discontinuous. Further, the LTE-Advanced system allows a plurality of parallel process steps to be carried out in the physical layer of the LTE-Advanced system. The LTE-Advanced system can support not only symmetric uplink bandwidth and downlink bandwidth, but also asymmetric uplink bandwidth and downlink bandwidth (Non-Patent Literature 2). For example, assume that the system has a downlink bandwidth of 40 MHz which is constituted by two asymmetric bandwidths each of which is 20 MHz. Then, the system has the uplink bandwidth which can be constituted by a set of one bandwidth of 20 MHz and one bandwidth of 10 MHz. Here, there is a fundamental demand that the LTE-Advanced system should be backward compatible with the UE of LTE Release 8..

### Citation List

### [Non-Patent Literature]

[Non-Patent Literature 1]
   R1-081809, On the consideration of technical candidates for LTE-advanced, LGE, 3GPP TSG RAN WG1 Meeting #53, May 5-9, 2008
[Non-Patent Literature 2]
   R1-083232, Carrier aggregation for LTE-A: E-NodeB Issues, Motorola, 3GPP TSG RAN WG1 Meeting #54, Aug 18-22, 2008

### Summary of Invention

Assuming based on the analysis on the current demand, the LTE-Advanced system is expected to have a downlink bandwidth of 100 MHz. For example, in a case where a unicast service and MBMS coexist in a single MBSFN subframe by a frequency division method, the unicast service also should employ Extended CP for data transmission. However, this results in a big waste of the resource. On the other hand, if a unicast service and MBMS can be effectively multiplexed in a single LTE-Advanced subframe, this can improve the resource usage in the system. In view of this, the present invention provides solutions.

### Technical Problem

An object of the present invention is to realize a frequency band for multiplexing a unicast service and MBMS in the LTE-Advanced system, so as to provide a mobile communication system for carrying out efficient data transmission. Namely, the present invention has an object to provide an effective solution to the following problem related to the LTE-Advanced system: A waste of the resource occurs when only one type of subframe format is used in a single subframe which schedules and transmits MBMS.

In order to realize the foregoing and/or other merits and to attain objects of the present invention described in plural parts of the present specification, the present invention provides a mobile communication system capable of carrying out, in the LTE-Advanced system, effective data transmission in a frequency band of a system for multiplexing a unicast service and MBMS.

### Solution to Problem

In order to attain the foregoing objects, a mobile communication system of the present invention is a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, and the set of the plurality of downlink component carriers including (i) a downlink component carrier employing a subframe structure according to which some symbols at the beginning of a subframe include control information and (ii) a downlink component carrier employing a subframe structure according to which some symbols at the beginning of a subframe do not include control information.

In order to attain the foregoing objects, a mobile communication system of the present invention is a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, the plurality of downlink component carriers including (i) an uplink grant for allocating a resource of an uplink component carrier corresponding to one of the plurality of downlink component carriers and (ii) an uplink grant for allocating a resource of an uplink component carrier not corresponding to any of the plurality of downlink component carriers.

In order to attain the foregoing objects, a mobile communication system of the present invention is a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, and the base station device and the mobile station device transmitting, in frequency division multiplexing, (i) a unicast service and (ii) a multimedia broadcast and multicast service by different ones of the plurality of downlink component carriers.

In order to attain the foregoing objects, a mobile communication system of the present invention is a mobile communication system, including: a base station device; and a mobile station device, the mobile communication system having a predetermined total bandwidth made of a set of a plurality of downlink component carriers, the base station device carrying out a transmitting process for each downlink physical layer provided for a respective one of the plurality of downlink component carriers, the mobile station device carrying out a receiving process for said each downlink physical layer provided for the respective one of the plurality of downlink component carriers, the set of the plurality of downlink component carriers including (i) a downlink component carrier for transmitting downlink data through use of a first subframe in which one or plural symbols at the beginning include control information for transmitting the downlink data and (ii) a downlink component carrier for transmitting downlink data through use of a second subframe in which one or plural symbols at the beginning do not include control information for transmitting the downlink data, the base station device transmitting, in a case where control information for transmitting downlink data is transmitted, the downlink data to the mobile station device through use of the first subframe, and the base station device transmitting, in a case where control information for transmitting downlink data is not transmitted, the downlink data to the mobile station device through use of the second subframe.

In order to attain the foregoing objects, a mobile communication system of the present invention is a mobile communication system, including: a base station device; and a mobile station device, the mobile communication system having a predetermined total bandwidth made of a set of a plurality of downlink component carriers, the base station device carrying out a transmitting process for each downlink physical layer provided for a respective one of the plurality of downlink component carriers, the mobile station device carrying out a receiving process for said each downlink physical layer provided for the respective one of the plurality of downlink component carriers, and the base station device causing the plurality of downlink component carriers to include (i) an uplink grant for allocating a resource of an uplink component carrier corresponding to one of the plurality of downlink component carriers and (ii) an uplink grant for allocating a resource of an uplink component carrier not corresponding to any of the plurality of downlink component carriers.

In order to attain the foregoing objects, a mobile communication system of the present invention is a mobile communication system, including: a base station device; and a mobile station device, the mobile communication system having a predetermined total bandwidth made of a set of a plurality of downlink component carriers, the base station device carrying out a transmitting process for each downlink physical layer provided for a respective one of the plurality of downlink component carriers, the mobile station device carrying out a receiving process for said each downlink physical layer provided for the respective one of the plurality of downlink component carriers, and the base station device transmitting (i) data of a unicast service and (ii) data of a multimedia broadcast and multicast service to the mobile station device, in such a manner that (i) the data of the unicast service and (ii) the data of the multimedia broadcast and multicast service are multiplexed on different ones of the plurality of downlink component carriers.

### Brief Description of Drawings

Fig. 1
Fig. 1 is a view schematically illustrating a physical layer processing method for downlink, which method is defined in LTE.
Fig. 2

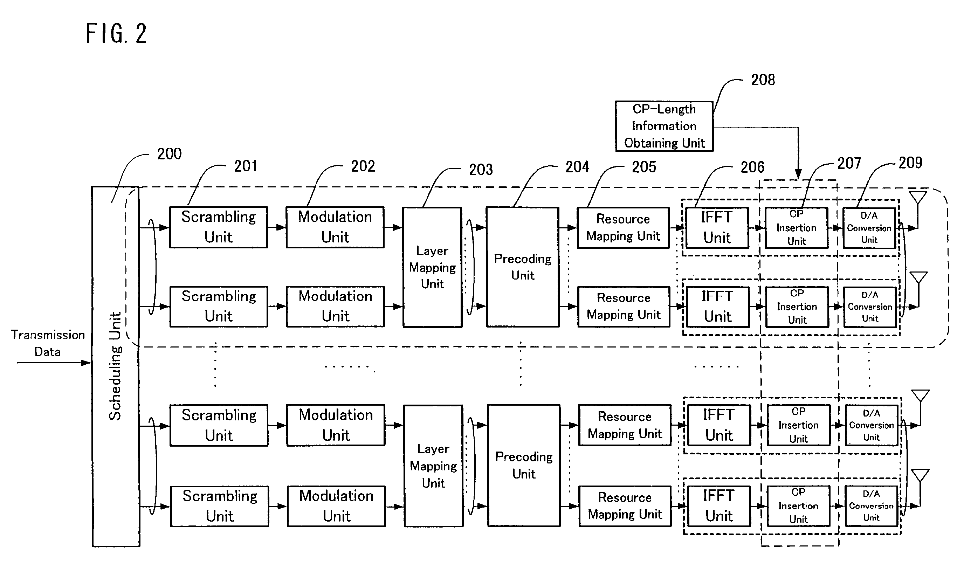

Fig. 2 is a view schematically illustrating a physical layer processing method of a transmitter, which serves as a base station in the LTE-Advanced system.
Fig. 3

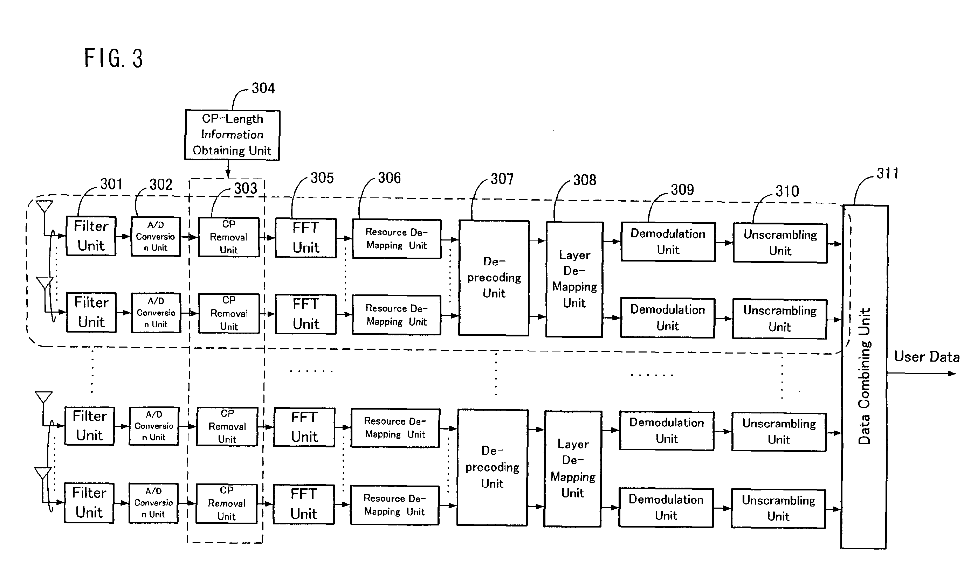

Fig. 3 is a view schematically illustrating a physical layer processing method of a receiver, which serves as UE in the LTE-Advanced system.
Fig. 4

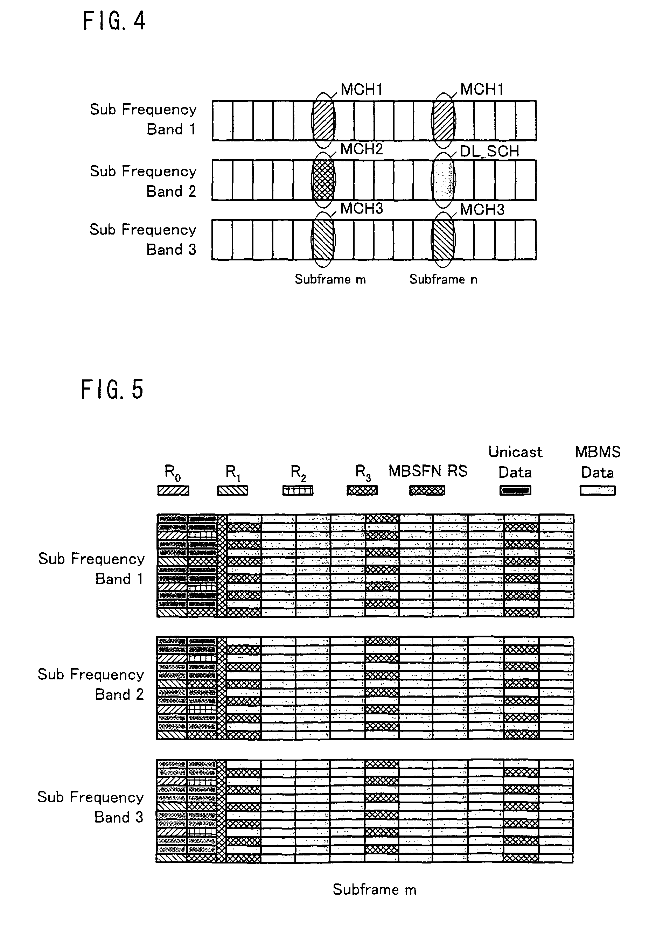

Fig. 4 is a view schematically illustrating a structure for multiplexing a unicast service and MBMS in the LTE-Advanced system.
Fig. 5
Fig. 5 is a view schematically illustrating an example where a plurality of MBSFN services are multiplexed in a single LTE-Advanced subframe in the LTE-Advanced system.
Fig. 6

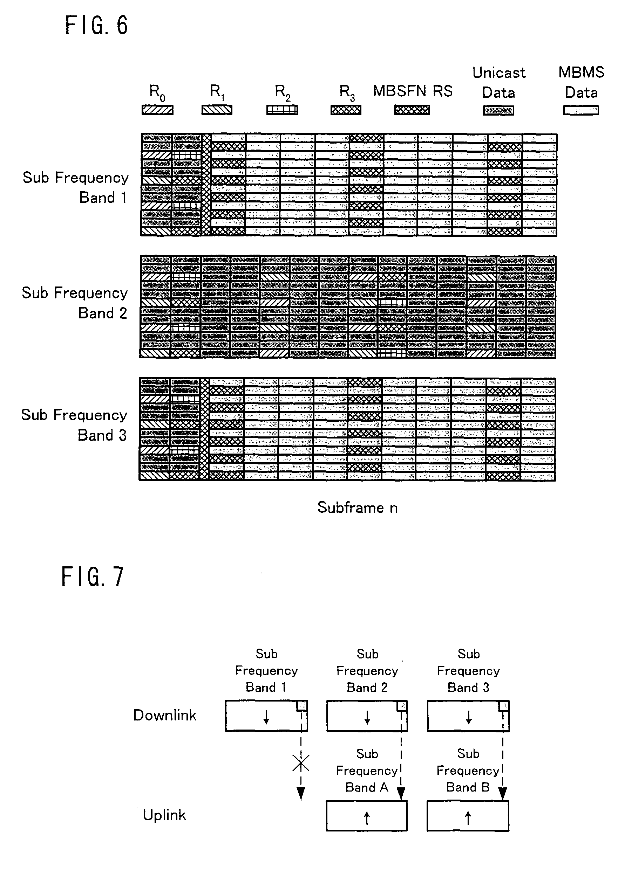

Fig. 6 is a view illustrating a state where MBMS and a unicast service are multiplexed in a single LTE-Advanced subframe in the LTE-Advanced system.
Fig. 7
Fig. 7 is a view schematically illustrating a problem caused by asymmetric uplink and downlink bandwidths in the LTE-Advanced system.
Fig. 8

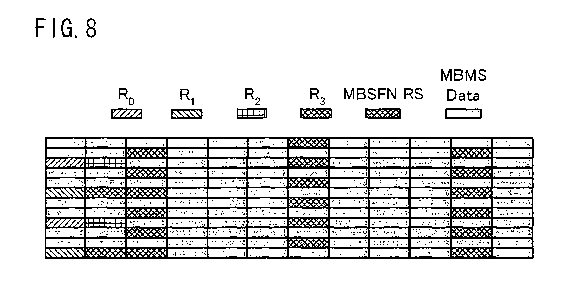

Fig. 8 is a view schematically illustrating an e-MBSFN subframe structure in the LTE-Advanced system.
Fig. 9

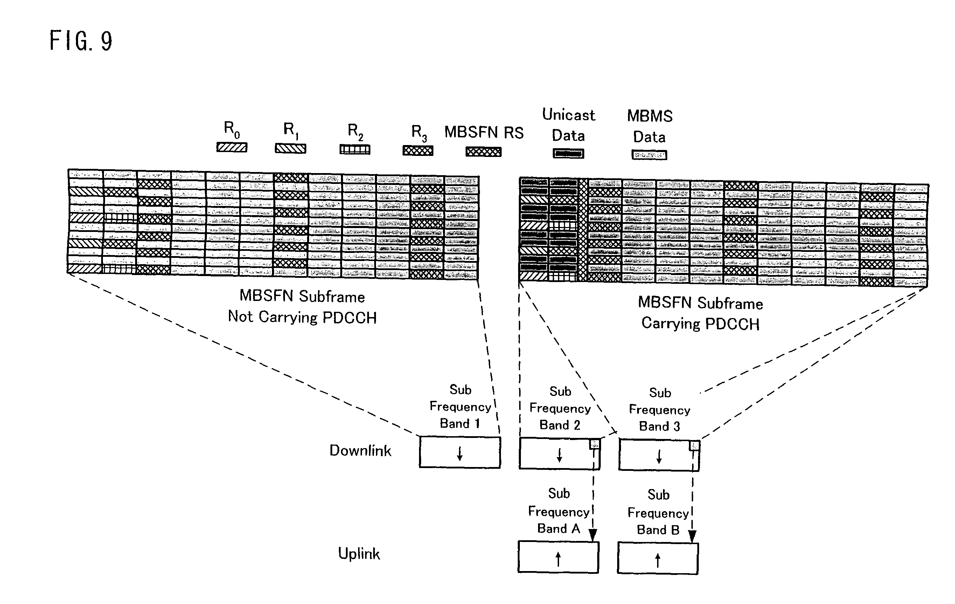

Fig. 9 is a view schematically illustrating an example where the e-MBSFN subframe structure is employed in order to solve the problem caused by the asymmetric uplink and downlink bandwidths.
Fig. 10

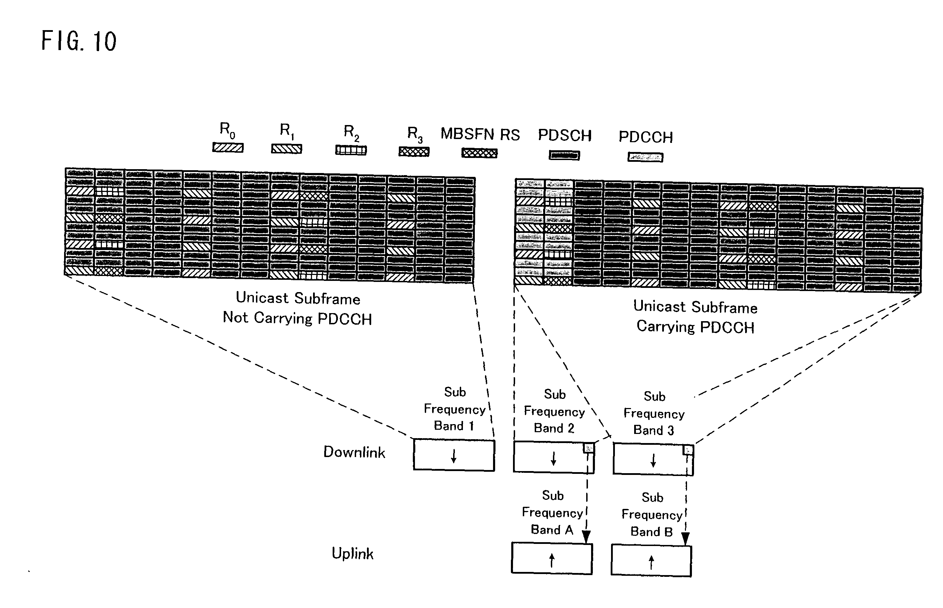

Fig. 10 is a view schematically illustrating an example where an e-Unicast subframe structure is employed in order to solve the problem caused by the asymmetric uplink and downlink bandwidths.
Fig. 11

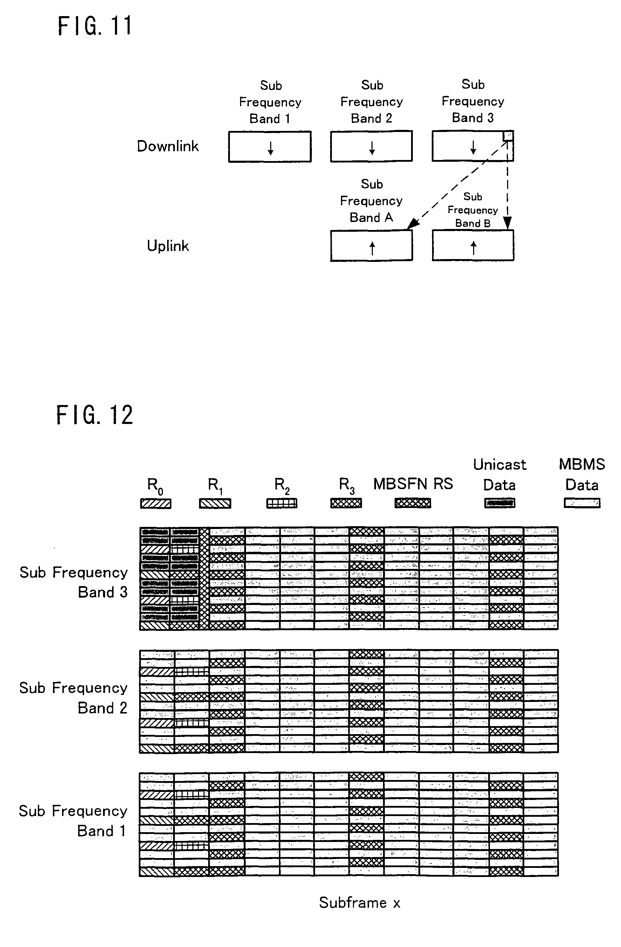

Fig. 11 is a view schematically illustrating another example where the e-MBSFN subframe structure is employed in order to solve the problem caused by the asymmetric uplink and downlink bandwidths.
Fig. 12
Fig. 12 is a view schematically illustrating a subframe structure in the LTE-Advanced system.
Fig. 13

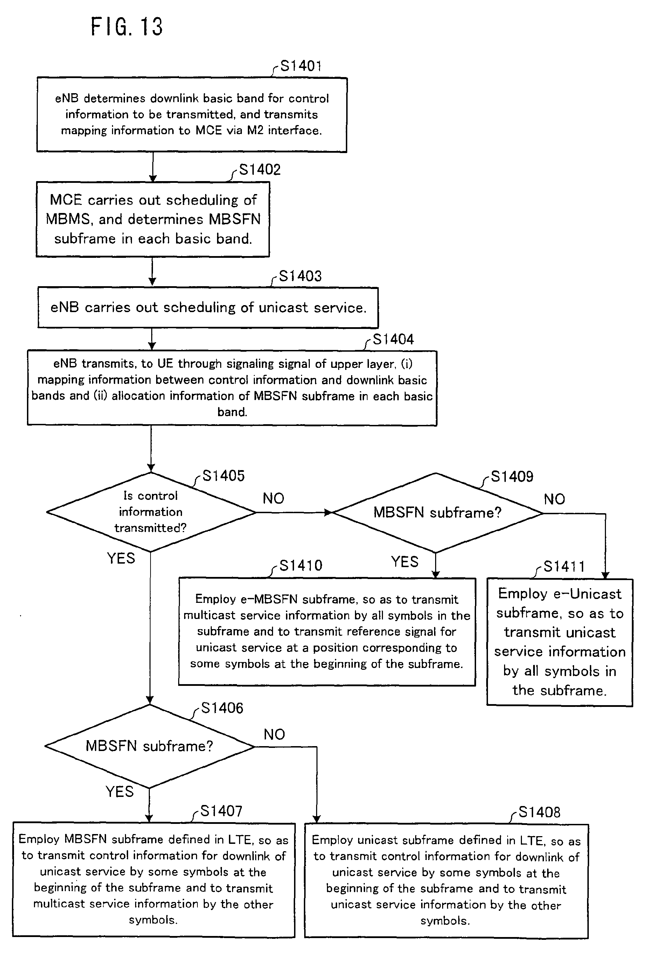

Fig. 13 is a flow chart illustrating a process carried out by the transmitter in the LTE-Advanced system.
Fig. 14

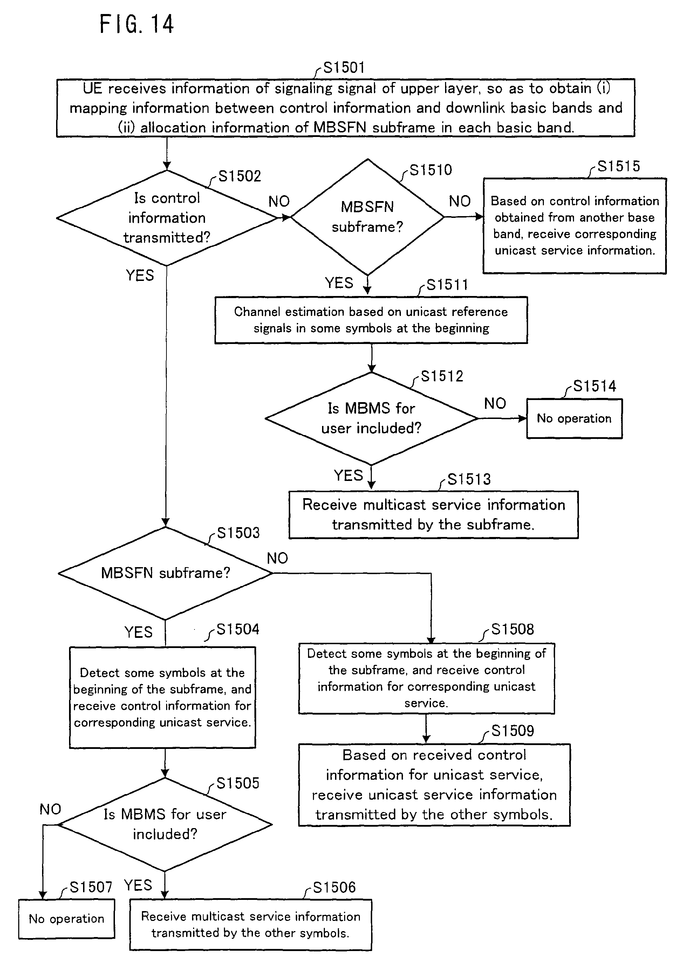

Fig. 14 is a flow chart illustrating a process carried out by the receiver in the LTE-Advanced system.
Fig. 15
Fig. 15 is a view schematically illustrating an MBSFN subframe structure defined in LTE.

### Description of Embodiments

The following will describe, with reference to drawings, details of a preferable embodiment of the present invention. In order to explain the present invention in an easy-to-understand manner, features and functions which are unnecessary for the present invention are not described herein.

In order to more specifically and clearly explain an embodiment realizing the present invention, the following will explain a concrete embodiment where the present invention is applied to an LTE-Advanced cellular mobile communication system, etc. Of course, the present invention is not limited to the application described herein. The present invention is also applicable in other mobile communication systems.

Fig. 1 shows a physical layer processing method for downlink, which is defined in the LTE system. As shown in Fig. 1, the physical layer processing method includes: a scrambling unit 100 for carrying out a scrambling process on a codeword having been subjected to channel encoding; a modulation unit 101 for carrying out symbol modulation on bits of the codeword having been subjected to the scrambling process; a layer mapping unit 102 for mapping the modulated symbols onto one or plural layers; a precoding unit 103 for carrying out a precoding process on the symbols mapped onto the layers; a resource mapping unit 104 for mapping precoded complex value modulation symbols on resource blocks for antennas; and an OFDM symbol generating unit 105 for (i) inserting CP for each time-domain symbol generated by carrying out, in each antenna, Inverse Fast Fourier transform (IFFT) on a symbol on each subcarrier and (ii) carrying out a digital-to-analog conversion. Note that the analog signal is up-converted, and is then transmitted via the antenna. This physical layer processing method can operate normally at any of the system bandwidths (1.4 MHz, 3 MHz, 5 MHz, 10 MHz, 15 MHz, and 20 MHz) defined in LTE.

According to the current discussion in the 3GPP about the demand for the LTE-Advanced system, the LTE-Advanced system needs a downlink bandwidth of 100 MHz, and the system should support normal operation in asymmetric uplink and downlink bandwidths. Further, in consideration of future asymmetricity in data service, the LTE-Advanced system is expected to have an uplink bandwidth smaller than the downlink bandwidth. Furthermore, for the configuration of the downlink bandwidth of the LTE-Advanced system, the following two methods are possible:
One of the two methods is a method by which a resource of a continuously-allocated 100MHz frequency spectrum is used for downlink transmission in the LTE-Advanced system. According to this method, it is possible to reuse the physical layer processing method in the LTE system, so that conversion from the frequency domain to the time domain is realized by IFFT with a great number of points, which is carried out in the OFDM symbol generating unit. For example, assume that LTE with a bandwidth of 20 MHz requires IFFT with 2048 points. Then, LTE-Advanced with a bandwidth of 100 MHz might require IFFT with 8192 points. Further, this method requires a liner power amplifier capable of supporting that the system has a bandwidth of 100 MHz.

However, in the World Radiocommunication Conference (WRC07) held in 2007, International Telegraph Union (ITU) proposed radio frequency spectrum allowed to be used by the LTE-Advanced system. According to this proposal, only in C-band (3400 MHz through 4200 MHz), a resource of a large, continuous frequency spectrum can be obtained. In other words, for resources of the other available frequency spectrum, it is difficult to obtain a continuous system bandwidth of 100 MHz.

On the other hand, the other of the above two methods, which is considered as having a high feasibility, is a method by which a resource made of discontinuously-allocated frequency spectrum of 100 MHz is used for downlink transmission in the LTE-Advanced system. Namely, according to this method, a bandwidth of 100 MHz, which is necessary for the system, is made of a set of small sub-bandwidths which are discontinuous and are located in respective plurality of frequency regions. In this method, one physical layer processing mechanism is necessary for each subframe, and IFFT should be carried out for each sub-bandwidth. Note that the number of points for this IFFT is identical to the number of points for IFFT in the LTE system. Similarly, one linear power amplifier is provided for each sub-bandwidth. A maximum bandwidth that this linear power amplifier can support is 20 MHz, as defined in LTE.

At this point of time, there is no clear definition as to which of the above methods is to be employed in the LTE-Advanced system. So far, many have suggested the need for a physical structure capable of concurrently and effectively supporting both of these methods. In consideration of this suggestion, as described below, the present embodiment provides a physical layer processing method for downlink of an LTE-Advanced system, which is shown in Figs. 2 and 3.

Frequency spectrum resources available for the LTE-Advanced are obtained, so that a bandwidth of the LTE-Advanced system is made of a plurality of base bands. Here, the frequency spectrum resources available for the LTE-Advanced may be continuous or discontinuous.

Fig. 2 shows a physical layer processing method of a transmitter (hereinafter, also referred to as "eNB", "eNodeB", or "base station device") in an LTE-Advanced system. The physical layer processing method in the LTE-Advanced system is made of a combination of a plurality of physical layer processing methods for LTE (in Fig. 2, a part surrounded by broken lines (i.e., a part including a scrambling unit 201 through a digital-to-analog conversion unit 209) indicates one of the physical layer processing methods for LTE), the methods being equivalent to each other and carrying out processes in parallel. Each physical layer processing methods for LTE is provided for one respective base band. Further, a parameter for each physical layer processing method for LTE is determined by the properties of its corresponding base band and its corresponding scheduling information. For example, the number of points for IFFT is determined by the size of a base band; a component carrier having been up-converted becomes a component carrier, which corresponds to the base band; and a length of CP which is to be inserted for a time-domain symbol is determined by a subframe structure which is currently scheduled in the base band.

As shown in Fig. 2, in each physical layer processing method of the transmitter, a scheduling unit 200 carries out, according to a user priority and a cache status, scheduling and allocation for (i) a base band used by the user, (ii) a time frequency resource block, and (iii) a structure employed in a scheduling subframe. The scrambling unit 201 carries out a scrambling process on a codeword having been subjected to channel encoding. The modulation unit 202 carries out symbol modulation on bits of the codeword having been subjected to the scrambling process. The layer mapping unit 203 maps the modulated symbols onto one or plural layers. The precoding unit 204 carries out a precoding process on the symbols mapped onto the layers. The resource mapping unit 205 maps precoded complex value modulation symbols on resource blocks of antennas. The IFFT unit 206 carries out, in each of the antennas, IFFT on a symbol on each subcarrier. The CP insertion unit 207 inserts CP for a time-domain symbol which is to be generated. The CP-length information obtaining unit 208 obtains, from a result of the scheduling carried out by the scheduling unit 200, information indicative of a length of CP which is to be inserted in a current subframe. The digital-to-analog conversion unit 209 converts the digital signal into an analog signal. The analog signal obtained through the process configured as above is finally up-converted, and is then transmitted via the antenna.

Fig. 3 shows a physical layer processing method of UE (User Equipment) (hereinafter, also referred to as "receiver" or "mobile station device") in the LTE-Advanced system. Based on the ability of UE, it is possible to check if UE can receive data of one or plural base bands. The physical layer processing method of UE is made of (i) one physical layer processing method for LTE or (ii) a set of a plurality of physical layer processing methods for LTE (in Fig. 3, a part surrounded by broken lines (i.e., a part including a filter unit 301 through an unscrambling unit 310) indicates one of the physical layer processing methods for LTE), the methods being equivalent to each other. Each physical layer processing method for LTE is provided for one respective base band. Further, a physical parameter for each physical layer processing method for LTE is determined by the properties of its corresponding base band and its corresponding scheduling information. For example, the number of points for IFFT is determined by the size of a base band; a component carrier having been up-converted becomes a component carrier, which corresponds to the base band; and a length of CP which is to be removed for a time-domain symbol is determined by a subframe structure which is currently scheduled in the base band.

As shown in Fig. 3, in each physical layer processing method of the transmitter, the filter unit 301 down-converts an analog signal received by an antenna, into a signal in the base band. The analog-to-digital conversion unit 302 converts the analog signal into a digital signal. The CP-length information obtaining unit 304 determines, based on a received signaling signal in an upper layer, a length of CP in a current subframe. Based on the information indicative of the length of CP obtained from the CP-length information obtaining unit 304, the CP removal unit 303 removes CP from the time-domain symbol. The FFT unit 305 carries out FFT on the signal received by each antenna. The resource de-mapping unit 306 reads, from resource blocks in a subframe structure for the current base band, complex value modulation symbols. The de-precoding unit 307 carries out a de-precoding process on the complex value modulation symbols obtained from the resource de-mapping unit 306. The layer de-mapping unit 308 combines the symbols mapped onto the plural layers. The demodulation unit 309 carries out a demodulation process on the symbol. The unscrambling unit 310 carries out an unscrambling process on the demodulated codeword. The data combining unit 311 combines data received by the antennas, and transmits combined data to an MAC layer so that a corresponding process is carried out.

According to the above-described physical layer structure in the LTE-Advanced system, it is possible to transmit a unicast service and MBMS by flexibly multiplexing the unicast service and the MBMS in each base band of the system frequency band. For example, as shown in Fig. 4, in a case where the system bandwidth is made of three base bands (sub frequency band 1, sub frequency band 2, and sub frequency band 3), a subframe for a unicast service carries out data transmission by using Normal CP.

In a subframe m, which has been scheduled, MCH 1 through MCH 3 ("MCH X" denotes an MBMS transmission channel in MBSFN X) are mapped onto physical resources of sub frequency bands 1 through 3, respectively, for example. In this manner, MBMS data of different MBSFNs can be mapped onto different base bands by frequency division multiplexing. In order to explain this frequency division multiplexing more specifically, Fig. 5 shows details of a structure of the frame m, which has been scheduled. In Fig. 5, Ro through R₃ denote cell-specific reference signals which are to be transmitted by antennas 0 to 3, respectively. MBSFN RS denotes an MBSFN area-specific reference signal. Each of the three base bands in the subframe m has a subframe structure completely identical to the MBSFN subframe structure defined in LTE.

On the other hand, in a subframe n, which has been scheduled, unicast service data and MBMS data can be mapped onto different base bands by frequency division multiplexing. In order to explain this frequency division multiplexing more specifically, Fig. 6 shows details of a structure of the subframe n, which has been scheduled. In the subframe n, each base band (sub frequency band 1, sub frequency band 3) for transmitting the MBMS data has a subframe structure completely identical to the MBSFN subframe structure defined in LTE. On the other hand, a base band (sub frequency band 2) for transmitting the unicast service data employs the subframe structure using Normal CP, which subframe structure is defined in LTE.

The LTE-Advanced system has been requested to support also a case where uplink and downlink are asymmetric to each other. For example, there may be a case where the system has (i) a downlink bandwidth made of three base bands each of which is 20 MHz and (ii) an uplink bandwidth made of two base bands each of which is 20 MHz. LTE defines an MBSFN subframe as follows: (i) one or two symbols at the beginning of the subframe is/are transmitted by a cell unicast method; and (ii) the content to be transmitted by the one or two symbols includes resource allocation information for the uplink transmission (UL grant, uplink grant), ACK/NAK information for the uplink transmission, and a cell-specific reference signal, which is specific to its corresponding cell.

To transmit control information (e.g., Physical Downlink Control Channel (PDCCH) shown in Figs. 9 and 10) by a method according to which an uplink base band and a downlink base band can be easily associated with each other in a one-to-one relationship is to transmit, in a downlink base band corresponding to one uplink base band, corresponding control information. As shown in Fig. 7, some symbols at the beginning of the downlink sub frequency band 2 transmit (i) uplink resource allocation information of the uplink sub frequency band A and (ii) corresponding ACK/NAK information of the uplink sub frequency band A, and some symbols at the beginning of the downlink sub frequency band 3 transmit (i) uplink resource allocation information of the uplink sub frequency band B and (ii) corresponding ACK/NAK information of the uplink sub frequency band B. Specifically, the symbol(s) for transmitting the uplink information is/are one or two symbols at the beginning of each base band. Concretely, whether (i) one symbol at the beginning is used to transmit the information or (ii) two symbols at the beginning are used to transmit the information is determined by the scheduling of the system.

According to the definition in LTE, in any of a unicast subframe defined in LTE and an MBSFN subframe defined in LTE, at least one symbol is reserved for transmission of corresponding control information. Therefore, also in the downlink sub frequency band 1, it is necessary to reserve a corresponding symbol for transmission of the control information. In this case, however, since the sub frequency band 1 has no corresponding uplink base band, no control information is necessary. Consequently, there occurs a certain amount of waste in the resource.

In view of the foregoing problems, the present invention provides a subframe structure for MBSFN evolved from the LTE (hereinafter, referred to as "e-MBSFN"), which subframe structure is for use in the LTE-Advanced system. Fig. 8 shows details of the subframe structure. As shown in Fig. 8, the e-MBSFN subframe structure employs Extended CP. Namely, according to this subframe structure, a subframe has a length corresponding to 12 OFDM symbols, which is equal to a length of an MBSFN subframe defined in LTE. Cell-specific reference signals are carried by RE(s) corresponding to one or two symbols at the beginning. In Fig. 8, Ro through R₃ denote cell-specific reference signals which are to be transmitted by the antennas 0 through 3, respectively. Depending on the number of transmission antennas in the base station, it is possible to determine whether one symbol is used or two symbols are used. For example, in a case where the base station has four antennas, two symbols are used. On the other hand, in a case where the base station has one or two antenna(s), one symbol is used. A method for mapping the cell-specific reference signals on one or two symbols at the beginning is identical to a method, defined by the unicast subframe structure using Extended CP in LTE, for mapping reference signals onto one or two symbols at the beginning. Into the third, seventh, and eleventh symbols of the subframe, MBSFN area-specific reference signals are inserted. A method for mapping the MBSFN area-specific reference signals in the subframe is identical to a method for mapping MBSFN area-specific reference signals onto corresponding symbols in the MBSFN subframe structure defined in LTE. All REs other than the MBSFN area-specific signals are used for MBMS transmission.

Furthermore, in view of the foregoing problems, the present invention provides a subframe structure for unicast evolved from LTE (hereinafter, referred to as "e-Unicast"), which subframe structure is for use in the LTE-Advanced system. This subframe structure is completely identical to the subframe structure defined in LTE. However, according to this subframe structure, an e-Unicast subframe structure transmits no control information. Namely, some symbols at the beginning of the subframe are not reserved for control signaling transmission. Rather, all REs in the subframe other than reference signals are used for transmission/reception of data information.

Fig. 9 is a view illustrating an application example of the e-MBSFN subframe structure. As shown in Fig. 9, in a scheduled subframe, each of the sub frequency band 2 and the sub frequency band 3 employs the MBSFN subframe structure defined in LTE so as to carry out data transmission. In the sub frequency band 2, two symbols at the beginning of the subframe include control information (PDCCH: Physical Downlink Control Channel) for the sub frequency band A. Further, in the sub frequency band 3, two symbols at the beginning of the subframe include control information for the sub frequency band B. In the scheduled subframe, the sub frequency band 1 employs the e-MBSFN subframe structure so as to carry out data transmission. In the sub frequency band 1, the subframe does not transmit any control information. This application example shows that employing the e-MBSFN subframe structure can more effectively solve the problem of the waste of the resource, as compared with cases where the e-MBSFN subframe structure is not employed.

Fig. 10 is a view for explaining an application example of the e-Unicast subframe structure. As shown in Fig. 10, in a scheduled subframe, each of the sub frequency band 2 and the sub frequency band 3 employs the unicast subframe structure defined in LTE so as to carry out data transmission. In the sub frequency band 2, two symbols at the beginning of the subframe include control information for the sub frequency band A. In the sub frequency band 3, two symbols at the beginning of the subframe include control information for the sub frequency band B. On the other hand, in the scheduled subframe, the sub frequency band 1 employs the e-Unicast subframe structure so as to carry out data transmission. In the sub frequency band 1, the subframe does not transmit any control information. This application example shows that employing the e-Unicast subframe structure can more effectively solve the problem of the waste of the resource, as compared with cases where the e-Unicast subframe structure is not employed.

Here, comparing (i) the control information in the unicast subframe in LTE and (ii) the control information in the MBSFN subframe, a symbol for the control information in the MBSFN subframe includes only UL grant (uplink grant) information for the uplink, and does not include resource allocation information for the downlink. Therefore, depending on the situation, a waste may occur in the resource of the symbols for the control information in the MBSFN subframe in LTE. In view of this, the present invention proposes that, in a single scheduled LTE-Advanced subframe, control information of a plurality of LTE MBSFN subframes on respective sub frequency bands is combined to be transmitted on the control information symbols of LTE MBSFN subframe on one sub frequency band. As shown in Fig. 11, the downlink sub frequency band 3 employs the MBSFN subframe structure in LTE. Further, the symbol for the control information of the sub frequency band 3 includes UL grant information and ACK/NAK information, each of which is for the uplink sub frequency band A and the uplink sub frequency band B. On the other hand, each of the downlink sub frequency band 1 and the downlink sub frequency band 2 can employ the e-MBSFN subframe structure for data transmission. Fig. 12 is a view more clearly illustrating a structure of the subframe. As shown in Fig. 12, this structure allows the symbol for the control information, which symbol has been conventionally wasted in the sub frequency band 1 and the sub frequency band 2, to be fully utilized for MBMS transmission.

In order that UE of LTE-Advanced accurately receives corresponding data information according to the above-described structure, it is necessary to obtain in advance information indicative of (i) a corresponding subframe structure and (ii) mapping between an uplink base band and a downlink base band. Fig. 13 is a flow chart illustrating a process carried out by a transmitter in an LTE-Advanced system. With reference to Fig. 13, the following will concretely explain a flow of a process carried out by a base station device. The flow of the process carried out by the base station device is as follows:
Step S1401: eNB determines a downlink base band for control information being to be transmitted. Then, eNB transmits, via an M2 interface, mapping information between the control information and the downlink base bands to MCE belonging to eNB.
Step S1402: MCE carries out scheduling of MBMS, and determines allocation information for allocating an MBSFN subframe. The allocation information includes (i) information indicating which base band of which subframe employs the MBSFN subframe structure in LTE and (ii) information indicating which base band of which subframe employs the e-MBSFN subframe structure.
Step S1403: eNB carries out scheduling of a unicast service.
Step S1404: eNB transmits, to UE through a signaling signal of an upper layer, (i) the mapping information between the control information and the downlink base bands and (ii) the allocation information for allocating the MBSFN subframe.
Step S1405: eNB determines whether or not control information is transmitted in a downlink base band.
Step S1406: If the control information is transmitted in the downlink base band, eNB determines whether or not a subframe currently scheduled in the current downlink base band is an MBSFN subframe.
Step S1407: If the subframe currently scheduled in the current downlink base band is an MBSFN subframe, eNB employs the MBSFN subframe structure defined in LTE, so as to transmit the control information for the downlink of the unicast service by some symbols at the beginning of the subframe and to transmit multicast service information by the other symbols.
Step S1408: If the subframe currently scheduled in the current downlink base band is not an MBSFN subframe, eNB employs the unicast defined subframe structure defined in LTE, so as to transmit the control information for the downlink of the unicast service by some symbols at the beginning of the subframe and to transmit unicast service information by the other symbols.
Step S1409: If the control information is not transmitted in the downlink base band, eNB determines whether or not the subframe currently scheduled in the current downlink base band is an MBSFN subframe.
Step S1410: If the subframe currently scheduled in the current downlink base band is an MBSFN subframe, eNB employs the e-MBSFN subframe structure, so as to transmit multicast service information by all symbols in the subframe and to transmit a reference signal for the unicast service at a position corresponding to some symbols at the beginning of the subframe.
Step S1411: If the subframe currently scheduled in the current downlink base band is not an MBSFN subframe, eNB employs the e-Unicast subframe structure, so as to transmit unicast service information by all symbols in the subframe.
   Fig. 14 shows a flow chart concretely illustrating a process carried out by a receiver in the LTE-Advanced system. As shown in Fig. 14, the flow of the process performed by UE is as follows:
Step S1501: UE receives information of the signaling signal of the upper layer, so as to obtain (i) the mapping information between the control information and the downlink base bands and (ii) allocation information for allocating the MBSFN subframe for each base band.
Step S1502: UE determines whether or not control information is transmitted in a downlink base band.
Step S1503: If the control information is transmitted in the downlink base band, UE determines whether or not a subframe currently scheduled in the current downlink base band is an MBSFN subframe.
Step S1504: If the subframe currently scheduled in the current downlink base band is an MBSFN subframe, UE employs the MBSFN subframe structure defined in LTE, so as to receive data. Then, UE detects some symbols at the beginning of the subframe so as to receive control information of corresponding unicast service.
Step S1505: UE determines whether or not the subframe includes MBMS for the user.
Step S1506: If the subframe includes the MBMS for the user, UE receives multicast service information which is transmitted by the other symbols.
Step S1507: If the subframe does not include the MBMS for the user, UE does not carry out any operation.
Step S1508: If the subframe currently scheduled in the current downlink base band is not an MBSFN subframe, UE employs the unicast subframe structure defined in LTE, so as to receive data. Then, UE detects some symbols at the beginning of the subframe so as to receive control information for corresponding unicast service.
Step S1509: UE receives, based on the received control information for the unicast service, unicast service information which is transmitted by the other symbols.
Step S1510: If the control information is not transmitted in the downlink base band, UE determines whether or not the subframe currently scheduled in the current downlink base band is an MBSFN subframe.
Step S1511: If the subframe currently scheduled in the current downlink base band is an MBSFN subframe, UE employs the e-MBSFN subframe structure, so as to receive the data. Then, UE carries out channel estimation based on unicast reference signals in some symbols from the top.
Step S1512: UE determines whether or not the subframe includes MBMS for the user.
Step S1513: If the subframe includes the MBMS for the user, UE receives multicast service which is transmitted by the subframe.
Step S1514: If the subframe does not include the MBMS for the user, UE does not carry out any operation.
Step S1515: If the subframe currently scheduled in the current downlink base band is not an MBSFN subframe, UE employs the e-Unicast subframe structure based on the control information obtained from a base band which is not the current downlink base band, and receives corresponding unicast service information.

According to the above-described physical layer processing method for the downlink of the LTE-Advanced, e-MBSFN subframe structure, e-Unicast subframe structure, and corresponding signals, the system of the present embodiment allows MBMS and a unicast service to be used in such a manner that the MBMS and the unicast service are flexibly multiplexed in each base band. Consequently, the limited radio resource is fully utilized, so that the usage of the system resource is improved. Furthermore, such the structure is easy to design and has low complexity in view of the system design. Therefore, this structure can actually satisfy demands of the system and UE.

As described above, a mobile communication system of the present invention is a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, and the set of the plurality of downlink component carriers including (i) a downlink component carrier employing a subframe structure according to which some symbols at the beginning of a subframe include control information and (ii) a downlink component carrier employing a subframe structure according to which some symbols at the beginning of a subframe do not include control information.

Further, the mobile communication system of the present invention may be configured such that: the mobile station device receives the control information from the downlink component carrier employing the subframe structure according to which some symbols at the beginning of the subframe include the control information.

Further, the mobile communication system of the present invention may be configured such that: the mobile station device receives data of a unicast service from a downlink component carrier being not the downlink component carrier from which the mobile station device receives the control information.

A mobile communication system of the present invention is a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, the plurality of downlink component carriers including (i) an uplink grant for allocating a resource of an uplink component carrier corresponding to one of the plurality of downlink component carriers and (ii) an uplink grant for allocating a resource of an uplink component carrier not corresponding to any of the plurality of downlink component carriers.

A mobile communication system of the present invention is a mobile communication system, including: a base station device; and a mobile station device, the mobile communication system having a predetermined total bandwidth made of a set of a plurality of downlink component carriers, the base station device and the mobile station device processing each downlink physical layer provided for a respective one of the plurality of downlink component carriers, and the base station device and the mobile station device transmitting, in frequency division multiplexing, (i) a unicast service and (ii) a multimedia broadcast and multicast service by different ones of the plurality of downlink component carriers.

Further, the mobile communication system of the present invention may be configured such that: the base station device and the mobile station device use, for transmitting the unicast service, a first part of subsystems for processing the downlink physical layers provided for the respective plurality of downlink component carriers; and the base station device and the mobile station device use, for transmitting the multimedia broadcast and multicast service, a remaining, second part of the subsystems.

Further, the mobile communication system of the present invention may be configured such that: the base station device and the mobile station device use a unicast subframe structure as the first part of the subsystems used for transmitting the unicast service; and the base station device and the mobile station device use a multicast single frequency network (MBSFN) subframe structure as the second part of the subsystems used for transmitting the multimedia broadcast and multicast service.

Further, the mobile communication system of the present invention may be configured such that: the base station device and the mobile station device use an evolved multicast single frequency network subframe structure as the second part of the subsystems used for transmitting the multimedia broadcast and multicast service; and according to the evolved multicast single frequency network subframe structure, all orthogonal frequency division multiplexing symbols in a subframe use extended cyclic prefixes, one or two orthogonal frequency division multiplexing symbols at the beginning of the subframe each include a cell-specific reference signal inserted thereto, an orthogonal frequency division multiplexing symbol in the subframe which orthogonal frequency division multiplexing symbol is not the one or two orthogonal frequency division multiplexing symbols includes a multicast single frequency network-specific reference signal inserted thereto, all resource elements in the subframe other than the cell-specific reference signal or the multicast single frequency network-specific reference signal are used for transmitting the multimedia broadcast and multicast service, and an insertion and mapping mode for the cell-specific reference signal and the multicast single frequency network-specific reference signal is identical to an insertion and mapping mode of a multicast single frequency network subframe structure.

Further, the mobile communication system of the present invention may be configured such that: the base station device and the mobile station device transmit control information by at least part of the plurality of downlink component carriers; and the base station device and the mobile station device use, for the unicast service or the multimedia broadcast and multicast service, resource elements in the other part of the plurality of downlink component carriers, the resource elements in the other part of the plurality of downlink component carriers being used for transmitting control information.

A mobile communication system of the present invention is a mobile communication system, including: a base station device; and a mobile station device, the mobile communication system having a predetermined total bandwidth made of a set of a plurality of downlink component carriers, the base station device carrying out a transmitting process for each downlink physical layer provided for a respective one of the plurality of downlink component carriers, the mobile station device carrying out a receiving process for said each downlink physical layer provided for the respective one of the plurality of downlink component carriers, the set of the plurality of downlink component carriers including (i) a downlink component carrier for transmitting downlink data through use of a first subframe in which one or plural symbols at the beginning include control information for transmitting the downlink data and (ii) a downlink component carrier for transmitting downlink data through use of a second subframe in which one or plural symbols at the beginning do not include control information for transmitting the downlink data, the base station device transmitting, in a case where control information for transmitting downlink data is transmitted, the downlink data to the mobile station device through use of the first subframe, and the base station device transmitting, in a case where control information for transmitting downlink data is not transmitted, the downlink data to the mobile station device through use of the second subframe.

A mobile communication system of the present invention is a mobile communication system, including: a base station device; and a mobile station device, the mobile communication system having a predetermined total bandwidth made of a set of a plurality of downlink component carriers, the base station device carrying out a transmitting process for each downlink physical layer provided for a respective one of the plurality of downlink component carriers, the mobile station device carrying out a receiving process for said each downlink physical layer provided for the respective one of the plurality of downlink component carriers, and the base station device causing the plurality of downlink component carriers to include (i) an uplink grant for allocating a resource of an uplink component carrier corresponding to one of the plurality of downlink component carriers and (ii) an uplink grant for allocating a resource of an uplink component carrier not corresponding to any of the plurality of downlink component carriers.

A mobile communication system of the present invention is a mobile communication system, including: a base station device; and a mobile station device, the mobile communication system having a predetermined total bandwidth made of a set of a plurality of downlink component carriers, the base station device carrying out a transmitting process for each downlink physical layer provided for a respective one of the plurality of downlink component carriers, the mobile station device carrying out a receiving process for said each downlink physical layer provided for the respective one of the plurality of downlink component carriers, and the base station device transmitting (i) data of a unicast service and (ii) data of a multimedia broadcast and multicast service to the mobile station device, in such a manner that (i) the data of the unicast service and (ii) the data of the multimedia broadcast and multicast service are multiplexed on different ones of the plurality of downlink component carriers.

As described above, the present invention provides a physical layer processing method for downlink of an LTE-Advanced system, the LTE-Advanced system having a bandwidth made of a set of sub-bandwidth(s) in one or more component carriers (component carriers), the physical layer processing method for the downlink of the LTE-Advanced system being made of one or more physical layer processing methods for the downlink of the LTE system, and each of the one or more physical layer processing methods providing a service corresponding to one component carrier of LTE-Advanced.

Preferably, the number of points for IFFT in each physical layer processing method for the downlink of the LTE system is determined by a size of a sub-bandwidth in its corresponding component carrier.

Preferably, each physical layer processing method for the downlink of the LTE system has CP whose length is determined by a subframe structure of its corresponding bandwidth.

Preferably, the subframe structure is defined in an LTE system, and is a subframe structure used for transmission of data of a unicast service.

Preferably, the subframe structure is defined in an LTE system, and is an MBSFN subframe structure used for transmission of data of MBMS.

Preferably, the subframe structure is an e-MBSFN subframe structure. According to the e-MBSFN subframe structure, all symbols employ CP having an extended length; the number of OFDM symbols is identical to the number of OFDM symbols in an MBSFN subframe in LTE; a cell-specific reference signal(s) are mapped onto RE(s) corresponding to one or two symbols at the beginning of a subframe, the mapping being carried out by the same method as a method, defined by a unicast subframe structure using Extended CP in LTE, for mapping a reference signal(s) onto one or two symbols at the beginning of a subframe; an e-MBSFN area-specific reference signal is inserted into an e-MBSFN subframe by the same method as a method, defined by an MBSFN subframe structure using Extended CP in LTE, for mapping an MBSFN area-specific reference signal; and all REs in an e-MBSFN subframe other than the e-MBSFN area-specific reference signal are used for e-MBMS transmission.

Preferably, the subframe structure is an e-Unicast subframe structure. The e-Unicast subframe structure and a subframe structure defined in LTE are completely identical to each other. According to the e-Unicast subframe structure, a predetermined number of symbols at the beginning of an e-Unicast subframe are not reserved for control information being to be transmitted.

Preferably, UE obtains, through a signaling signal of an upper layer, mapping information between control information and downlink base bands. Concrete steps therefor is as follows: A base station determines mapping information between control information and downlink base bands, and notifies, through a broadcast channel, the mapping information between the control information and the downlink base bands. Then, the base station transmits, via an M2 interface, the mapping information between the control information and the downlink base bands to MCE (Multi-cell/ Multicast Coordination Entity) belonging to the base station. Subsequently, the MCE carries out scheduling of MBMS, determines allocation information for allocating an MBSFN subframe, and transmits, to the base station device (eNB or eNodeB) via the M2 interface, the allocation information for allocating the MBSFN subframe. After that, the base station notifies, via the broadcast channel, all UE of the allocation information for allocating the MBSFN subframe.

Preferably, the allocation information for allocating the MBSFN subframe includes (i) information about a subframe and a sub-bandwidth each employing an MBSFN subframe structure in LTE and (ii) information about a subframe and a sub-bandwidth each employing an e-MBSFN subframe structure.

Preferably, the allocation information for allocating the MBSFN subframe is used to give an instruction to transmit a subframe for MBMS and a sub-bandwidth for MBMS.

Preferably, in a subframe employing, so as to transmit data of MBMS, an MBSFN subframe structure defined in LTE, a symbol for transmitting control information includes, for one or plural sub-bandwidths, (i) resource allocation information for the uplink and (ii) ACK/ NAK information for the uplink.

As a first aspect, the present invention provides a system for multiplexing a unicast service and MBMS, the system having a predetermined total bandwidth made of a set of a base band(s) in one or plural component carriers, the system including one or plural subsystems for processing respective different physical layers for downlink of an LTE system, each of the subsystems providing a service for a respective one of the one or plural component carriers, so that the unicast service and the MBMS are transmitted in frequency division multiplexing by the one or plural component carriers.

As a second aspect, the present invention provides a method for multiplexing a unicast service and MBMS, the method using a predetermined total system bandwidth made of a set of a base band(s) in one or plural component carriers, the method including: transmitting the unicast service and the MBMS in a multiplexed manner by employing one or plural subsystems which process respective different physical layers for downlink of an LTE system so that each of the one or plural subsystems carries out a service for a respective one of the one or plural component carriers.

Preferably, a first part of the one or plural subsystems which process the respective different physical layers for the downlink of the LTE system is used for transmitting the unicast service, and a remaining, second part of the one or plural subsystems is used for transmitting the MBMS. Further preferably, the first part of the subsystems used for transmitting the unicast service employs a unicast subframe structure defined in the LTE system, and the second part of the subsystem used for transmitting the MBMS employs an MBSFN subframe structure defined in the LTE system.

Alternatively, the first part of the subsystems used for transmitting the unicast service employs an e-Unicast subframe structure. According to the e-Unicast subframe structure, a subframe has the same structure as that defined in the LTE system, and all REs are used for transmitting the unicast service, without reserving any RE for transmission of control information.

Alternatively, the second part of the subsystem used for transmitting the MBMS employs an e-MBSFN subframe structure. According to the e-MBSFN subframe structure, all orthogonal frequency division multiplexing symbols in a subframe use Extended CP; one or two orthogonal frequency division multiplexing symbols at the beginning of the subframe each include a cell-specific reference signal inserted thereto; an orthogonal frequency division multiplexing symbol in the subframe which orthogonal frequency division multiplexing symbol is not the one or two orthogonal frequency division multiplexing symbols includes an MBSFN-specific reference signals inserted thereto; all REs in the subframe other than the cell-specific reference signal or the MBSFN-specific reference signal are used for transmitting the MBMS; and an insertion and mapping mode for the cell-specific reference signal and the MBSFN-specific reference signal is identical to an insertion and mapping mode, defined in the LTE system, of the MBSFN subframe structure.

Preferably, the one or plural base bands have the same width. Alternatively, at least one of the one or plural base bands has a width different from those of the others. Further preferably, each of the one or plural base bands is selected from all bandwidths defined in the LTE system.

Preferably, at least part of the one or plural base bands transmits control information, and REs in the other part of the one or plural base bands are used for the unicast service or the MBMS, the REs in the other part of the one or plural base bands being used to transmit control information.

As a third aspect, the present invention provides a method for transmitting a unicast service and MBMS in a multiplexed manner, the method using a predetermined total system bandwidth made of a set of a base band(s) in one or plural component carriers, the method including: transmitting (i) mapping information between control information and downlink base bands and (ii) allocation information for allocating a MBSFN subframe; and transmitting the control information by at least part of the one or plural component carriers. Further, this method carries out, for each downlink base band, the following steps: determining whether or not control information is transmitted in the downlink base band, based on the mapping information between the control information and the downlink base bands; determining, in a case where the control information is not transmitted in the downlink base band, whether or not a subframe which is currently scheduled in the downlink base band is an MBSFN subframe, based on the allocation information for allocating the MBSFN subframe; transmitting, in a case where the subframe which is currently scheduled in the downlink base band is an MBSFN subframe, the MBMS through use of an e-MBSFN subframe structure; and transmitting, in a case where the subframe which is currently scheduled in the downlink base band is not an MBSFN subframe, the unicast service through use of an e-Unicast subframe structure.

Preferably, the above method for multiplexing transmission further includes the following steps: determining the downlink base band for transmitting the control information; carrying out scheduling of the MBMS and determining the allocation information for allocating the MBSFN subframe; and carrying out scheduling of the unicast service.

Preferably, the above method for multiplexing transmission further includes the following steps: determining, in a case where the control information is transmitted in the downlink base band, whether or not the subframe which is currently scheduled in the downlink base band is an MBSFN subframe, based on the allocation information for allocating the MBSFN subframe; transmitting, in a case where the subframe which is currently scheduled in the downlink base band is an MBSFN subframe, the MBMS through use of an MBSFN subframe structure defined in an LTE system; and transmitting, in a case where the subframe which is currently scheduled in the downlink base band is not an MBMS Single Frequency Network subframe, the unicast service through use of a unicast subframe structure defined in the LTE system.

As a fourth aspect, the present invention provides a method for receiving a unicast service and MBMS in a multiplexed manner, the method using a predetermined total system bandwidth made of a set of base bands in one or plural component carriers, the method including: obtaining (i) mapping information between control information and base bands and (ii) allocation information for allocating an MBSFN subframe; and transmitting control information by at least part of the one or plural component carriers. Further, this method carries out, for each downlink base band, the following steps: determining whether or not control information has been transmitted in the downlink base band, based on the mapping information between the control information and the base bands; determining, in a case where the control information has not been transmitted in the downlink base band, whether or not a subframe currently scheduled in the downlink base band is an MBSFN subframe, based on the allocation information for allocating the MBSFN subframe; estimating, in a case where the subframe currently scheduled in the downlink base band is an MBSFN subframe, a channel in accordance with a unicast reference signal in the MBSFN subframe; determining whether or not the above MBSFN subframe includes MBMS for a user who is using the service; and receiving, in a case where the MBSFN subframe includes the MBMS for the user who is using the service, the MBMS in accordance with an e-MBSFN subframe format.

Preferably, the above method for multiplexing reception further includes the following step: receiving, in a case where the subframe currently scheduled in the downlink base band is not an MBSFN subframe, the unicast service in accordance with an e-Unicast subframe format based on control information for the unicast service, the control information being obtained from a base band which is not the above downlink base band.

Preferably, the above method for multiplexing reception further includes the following step: determining, in a case where the control information is transmitted in the downlink base band, whether or not the subframe currently scheduled in the downlink base band is an MBSFN subframe, based on the allocation information for allocating the MBSFN subframe; receiving, in a case where the subframe currently scheduled in the downlink base band is an MBSFN subframe, control information for the unicast service from the MBSFN subframe; determining whether or not the above MBSFN subframe include MBMS for the user who is using the service; receiving, in a case where the MBSFN subframe include the MBMS for the user who is using the service, the MBMS in accordance with an MBSFN subframe format defined in LTE; and receiving, in a case where the subframe currently scheduled in the downlink base band is not an MBSFN subframe, control information for the unicast service from the currently scheduled subframe, and receiving the unicast service in accordance with a unicast subframe format defined in the LTE system.

According to the above aspects of the present invention, the present invention provides paths each processing one physical layer for a respective base band for LTE-Advanced, and employs a new MBSFN subframe structure. Consequently, the present invention can reduce, by scheduling, a resource occupied by control information for downlink. Further, the present invention allows a unicast service and MBMS to be used in such a manner that the unicast service and the MBMS are multiplexed in a single scheduling subframe by frequency division multiplexing. Therefore, the present invention can effectively solve the problem of a waste of a resource occurring in a conventional LTE-Advanced system according to which only one type of subframe format is employed in a single subframe for scheduling and transmitting MBMS, and therefore is applicable to multiplexing transmission of MBMS and a unicast service in an LTE-Advanced system.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

The present invention is applicable to a mobile communication system including a base station device and a mobile station device. Particularly, the present invention is suitably applicable to a mobile communication system for transmitting (i) a unicast service and (ii) a multimedia broadcast and multicast service in a multiplexed manner.

### Reference Signs List

- 200: Scheduling unit
- 201: Scrambling unit
- 202: Modulation unit
- 203: Layer mapping unit
- 204: Precoding unit
- 205: Resource mapping unit
- 206: IFFT unit
- 207: CP insertion unit
- 208: CP-length information obtaining unit
- 209: Digital-to-analog conversion unit
- 301: Filter unit
- 302: Analog-to-digital conversion unit
- 303: CP removal unit
- 304: CP-length information obtaining unit
- 305: FFT unit
- 306: Resource de-mapping unit
- 307: De-precoding unit
- 308: Layer de-mapping unit
- 309: Demodulation unit
- 310: Unscrambling unit
- 311: Data combining unit

## Claims

1. A mobile communication system, comprising:
a base station device; and
a mobile station device,
the mobile communication system having a predetermined total bandwidth made of a set of a plurality of downlink component carriers,
the base station device and the mobile station device processing each downlink physical layer provided for a respective one of the plurality of downlink component carriers, and
the set of the plurality of downlink component carriers including (i) a downlink component carrier employing a subframe structure according to which some symbols at the beginning of a subframe include control information and (ii) a downlink component carrier employing a subframe structure according to which some symbols at the beginning of a subframe do not include control information.

2. The mobile communication system as set forth in claim 1, wherein:
the mobile station device receives the control information from the downlink component carrier employing the subframe structure according to which some symbols at the beginning of the subframe include the control information.

3. The mobile communication system as set forth in claim 2, wherein:
the mobile station device receives data of a unicast service from a downlink component carrier being not the downlink component carrier from which the mobile station device receives the control information.

4. A mobile communication system, comprising:
a base station device; and
a mobile station device,
the mobile communication system having a predetermined total bandwidth made of a set of a plurality of downlink component carriers,
the base station device and the mobile station device processing each downlink physical layer provided for a respective one of the plurality of downlink component carriers,
the plurality of downlink component carriers including (i) an uplink grant for allocating a resource of an uplink component carrier corresponding to one of the plurality of downlink component carriers and (ii) an uplink grant for allocating a resource of an uplink component carrier not corresponding to any of the plurality of downlink component carriers.

5. A mobile communication system, comprising:
a base station device; and
a mobile station device,
the mobile communication system having a predetermined total bandwidth made of a set of a plurality of downlink component carriers,
the base station device and the mobile station device processing each downlink physical layer provided for a respective one of the plurality of downlink component carriers, and
the base station device and the mobile station device transmitting, in frequency division multiplexing, (i) a unicast service and (ii) a multimedia broadcast and multicast service by different ones of the plurality of downlink component carriers.

6. The mobile communication system as set forth in claim 5, wherein:
the base station device and the mobile station device use, for transmitting the unicast service, a first part of subsystems for processing the downlink physical layers provided for the respective plurality of downlink component carriers; and
the base station device and the mobile station device use, for transmitting the multimedia broadcast and multicast service, a remaining, second part of the subsystems.

7. The mobile communication system as set forth in claim 6, wherein:
the base station device and the mobile station device use a unicast subframe structure as the first part of the subsystems used for transmitting the unicast service; and
the base station device and the mobile station device use a multicast single frequency network (MBSFN) subframe structure as the second part of the subsystems used for transmitting the multimedia broadcast and multicast service.

8. The mobile communication system as set forth in claim 6 or 7, wherein:
the base station device and the mobile station device use an evolved multicast single frequency network subframe structure as the second part of the subsystems used for transmitting the multimedia broadcast and multicast service; and
according to the evolved multicast single frequency network subframe structure,
all orthogonal frequency division multiplexing symbols in a subframe use extended cyclic prefixes,
one or two orthogonal frequency division multiplexing symbols at the beginning of the subframe each include a cell-specific reference signal inserted thereto,
an orthogonal frequency division multiplexing symbol in the subframe which orthogonal frequency division multiplexing symbol is not the one or two orthogonal frequency division multiplexing symbols includes a multicast single frequency network-specific reference signal inserted thereto,
all resource elements in the subframe other than the cell-specific reference signal or the multicast single frequency network-specific reference signal are used for transmitting the multimedia broadcast and multicast service, and
an insertion and mapping mode for the cell-specific reference signal and the multicast single frequency network-specific reference signal is identical to an insertion and mapping mode of a multicast single frequency network subframe structure.

9. The mobile communication system as set forth in any one of claims 5 through 8, wherein:
the base station device and the mobile station device transmit control information by at least part of the plurality of downlink component carriers; and
the base station device and the mobile station device use, for the unicast service or the multimedia broadcast and multicast service, resource elements in the other part of the plurality of downlink component carriers, the resource elements in the other part of the plurality of downlink component carriers being used for transmitting control information.

10. A mobile communication system, comprising:
a base station device; and
a mobile station device,
the mobile communication system having a predetermined total bandwidth made of a set of a plurality of downlink component carriers,
the base station device carrying out a transmitting process for each downlink physical layer provided for a respective one of the plurality of downlink component carriers,
the mobile station device carrying out a receiving process for said each downlink physical layer provided for the respective one of the plurality of downlink component carriers,
the set of the plurality of downlink component carriers including (i) a downlink component carrier for transmitting downlink data through use of a first subframe in which one or plural symbols at the beginning include control information for transmitting the downlink data and (ii) a downlink component carrier for transmitting downlink data through use of a second subframe in which one or plural symbols at the beginning do not include control information for transmitting the downlink data,
the base station device transmitting, in a case where control information for transmitting downlink data is transmitted, the downlink data to the mobile station device through use of the first subframe, and
the base station device transmitting, in a case where control information for transmitting downlink data is not transmitted, the downlink data to the mobile station device through use of the second subframe.

11. A mobile communication system, comprising:
a base station device; and
a mobile station device,
the mobile communication system having a predetermined total bandwidth made of a set of a plurality of downlink component carriers,
the base station device carrying out a transmitting process for each downlink physical layer provided for a respective one of the plurality of downlink component carriers,
the mobile station device carrying out a receiving process for said each downlink physical layer provided for the respective one of the plurality of downlink component carriers, and
the base station device causing the plurality of downlink component carriers to include (i) an uplink grant for allocating a resource of an uplink component carrier corresponding to one of the plurality of downlink component carriers and (ii) an uplink grant for allocating a resource of an uplink component carrier not corresponding to any of the plurality of downlink component carriers.

12. A mobile communication system, comprising:
a base station device; and
a mobile station device,
the mobile communication system having a predetermined total bandwidth made of a set of a plurality of downlink component carriers,
the base station device carrying out a transmitting process for each downlink physical layer provided for a respective one of the plurality of downlink component carriers,
the mobile station device carrying out a receiving process for said each downlink physical layer provided for the respective one of the plurality of downlink component carriers, and
the base station device transmitting (i) data of a unicast service and (ii) data of a multimedia broadcast and multicast service to the mobile station device, in such a manner that (i) the data of the unicast service and (ii) the data of the multimedia broadcast and multicast service are multiplexed on different ones of the plurality of downlink component carriers.
